(19) Europäisches Patentamt
European Patent Office
Office européen des brevets

(11) Publication number: 0 230 036
B1

(12) # EUROPEAN PATENT SPECIFICATION

(45) Date of publication of patent specification: 31.01.90

(51) Int. Cl.$^5$: H 01 M 8/24, H 01 M 8/06

(21) Application number: 86117882.0

(22) Date of filing: 22.12.86

(54) **Fuel cell apparatus with internal reforming.**

(30) Priority: 23.12.85 US 812315

(43) Date of publication of application:
29.07.87 Bulletin 87/31

(45) Publication of the grant of the patent:
31.01.90 Bulletin 90/05

(84) Designated Contracting States:
DE FR GB IT NL

(56) References cited:
EP-A-0 076 019
EP-A-0 098 605
EP-A-0 108 467
GB-A-2 025 118
US-A-3 488 226
US-A-4 647 516

PATENT ABSTRACTS OF JAPAN, vol. 7, no. 229 (E-203)1374r, 12th October 1983; & JP-A-58 119 167 (TOKYO SHIBAURA DENKI K.K.) 15-07-1983

PATENT ABSTRACTS OF JAPAN, vol. 9, no. 150 (E-324)1873r, 25th June 1985; & JP-A-60 32 255 (MITSUBISHI DENKI K.K.) 19-02-1985

(73) Proprietor: Energy Research Corporation
3 Great Pasture Road
Danbury Connecticut 06810 (US)

(72) Inventor: Baker, Bernard S.
17 Meadow Drive
Brookfield Center Connecticut 16805 (US)

(74) Representative: Abitz, Walter, Dr.-Ing. et al
Dr.-Ing. Walter Abitz Dr. Dieter F. Morf Dipl.-Phys. M. Gritschneder Dr. A. Freiherr von Wittgenstein Patentanwälte Poschingerstrasse 6 Postfach 86 01 09
D-8000 München 86 (DE)

EP 0 230 036 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the Invention

This invention relates to fuel cells and, in particular, to fuel cells in which the fuel process gas for the fuel cells is derived by reforming of the fuel supply internal of the fuel cells.

A variety of fuel cell arrangements have been proposed in which the fuel process gas for the cells is internally generated. In U.S. Patent 3,488,226 internal reforming is carried out by situating the reforming catalyst directly in the anode chamber of the fuel cells. U.S. Patent 4,182,795, on the other hand, utilizes a fuel cell chamber for the reforming catalyst which is isolated from the cell electrolyte.

The above fuel cell arrangements utilizing internal reforming are attractive because they eliminate the need for an external fuel processor and because they provide increased system efficiency. Also, there is a good match between the heat flows as the fuel cell electrochemical reaction is exothermic while the *in situ* fuel reforming reaction is endothermic.

The presence of the reforming catalyst in the fuel cell, however, tends to make the temperature distribution or profile of the cell in the direction of the fuel gas flow non-uniform, since the reforming reaction cools the cell to a greater degree in the regions thereof adjacent the point of introduction of the fuel supply. U.S. Patent Application No. 642,375, EP—173 904, assigned to the same assignee hereof, discloses one technique for counteracting this effect by non-uniformly distributing reforming catalyst over the reforming chamber. Researches, however, are still looking for less complex and simpler arrangements for negating the non-uniform cooling effect of the reforming catalyst.

It is therefore an object of the present invention to provide a fuel cell apparatus which utilizes internal reforming but which tends to avoid the non-uniformity in temperature profile which normally accompanies the reforming reaction.

### Summary of the Invention

In accordance with the principles of the present invention, the above and other objectives are realized in a fuel cell apparatus wherein one or more fuel cells each having first and second end faces are arranged in stack fashion and with their respective first end faces aligned and their respective second end faces aligned. Each fuel cell includes an anode chamber which runs between and which has gas entry and gas exit ports adjacent to its first and second end faces, respectively. A catalyst chamber is provided in heat conducting relationship to the stack of cells. The catalyst chamber runs in the direction of the anode chambers of the cells and has gas entry and gas exit ports adjacent to the second and first end faces of the cells, respectively. Catalyst promotive of endothermic reformation of a fuel supply is disposed in the catalyst chamber and in the anode chambers of the cells and means is provided for coupling the gas entry ports of the anode chambers of the cells to the gas exit port of the catalyst chamber.

With this structure for the fuel cell apparatus of the invention, fuel supply provided at the entry port of the catalyst chamber will tend to be reformed in regions of the chamber closest such end and thus closest the second end faces of the cells, while fuel supply not reformed in the catalyst chamber and coupled from its exit port to the entry ports of the anode chambers of the cells will tend to be reformed in regions of the anode chambers closest such entry ends and thus the first end faces of the fuel cells. The reforming which takes place in the catalyst chamber will therefore tend to cool the fuel cells in regions closer to the second end faces of the cells and the reforming which takes place in the anode chambers will tend to cool the fuel cells closer to the first end faces of the cells. Accordingly, the overall effect will be a more uniform cooling of the cells than would otherwise take place if the reforming were carried out exclusively in the catalyst chamber or the anode chamber.

In the embodiment of the invention to be disclosed hereinafter, a plurality of fuel cell apparatuses are themselves arranged in a stack with a common manifold which couples the exit ports of the catalysts chambers of the apparatuses with the entry ports of the anode chambers of the fuel cells of the apparatuses. In a further embodiment of the invention, the catalyst in each catalyst chamber extends to a point short of the first end faces of the fuel cells and the catalyst in the anode chambers of the fuel cells extends to point short of the second end faces of the cells. This partial filling of the respective chambers tends to further promote uniformity in the cooling effect.

### Brief Description of the Drawings

The above and other features and aspects of the present invention will become more apparent upon reading the following detailed description in conjunction with the accompanying drawings, in which:

Fig. 1 shows schematically a plurality of fuel cell apparatuses arranged in a stack in accordance with the principles of the present invention;

Fig. 2 illustrates in greater detail the individual fuel cells comprising the fuel cell apparatuses of Fig. 1; and

Fig. 3 shows a further embodiment of the fuel cell arrangement of Fig. 1.

### Detailed Description

Fig. 1 shows a plurality of fuel cell apparatuses 1 in accordance with the principles of the present invention. The fuel cell apparatuses 1 are themselves stacked together to form a composite fuel cell stack 10.

As shown, each fuel cell apparatus 1 includes one or more fuel cells 2 each having first and second end faces 2a and 2b. The fuel cells are stacked one on the other so that the end faces 2a

of the cells and the end faces 2b of the cells are in adjacent aligned relationship.

As illustrated in greater detail in Fig. 2, each cell 2 comprises a sandwich construction of a cathode gas chamber 2c, a cathode electrode 2d, an electrolyte 2e, an anode electrode 2f, and an anode gas chamber 2 g. The anode gas chamber 2 g of each cell 2 runs between the end faces 2a and 2b of the cell and has a gas entry port 2g1 adjacent the end face 2a and a gas exit port 2g2 adjacent the end face 2b. Typically, the anode and cathode gas chambers 2c and 2g of the cells are formed by fuel cell plates having channels cut therein for gas passage.

Each fuel cell apparatus 1 further includes a catalyst chamber 3 situated in heat conducting relationship with the cells 2 of the apparatus. Each catalyst chamber 3 runs in the direction of the anode chambers of the cells 2 of the apparatus 1 and has gas entry and exit ports 3a and 3b adjacent the end faces 2b and 2a of the cells 2 and, thus, the gas exit 2g2 and gas entry ports 2g1 of the anode chambers 2g. In the present illustrative case, each catalyst chamber is formed by the facing cells of adjacent or following apparatuses 1.

The exit port 3b of each catalyst chamber 3 is, in turn, coupled to the entry ports 2g1 of the anode chambers 2g of the cells 2 of the associated apparatus 1. In the present case, this is accomplished by a manifold 4 which is common to all the catalyst chambers 3 and all the anode chambers 2 g of the apparatuses 1.

Each of the apparatuses 1 is further provided with a manifold 5 which is common to the exit ports 2g2 of the anode chambers 2g of the cells 2 of that apparatus. Successive manifolds 5, in turn, define the entry ports 3a of the catalyst chambers 3.

In further accord with the invention, a catalyst 6 promotive of endothermic reforming of the hydrocarbon content of a fuel supply is disposed in each of the catalyst chambers 3 and in one or more of the anode chambers 2 g of the cells 2 of the apparatuses 1. In the case shown in Fig. 1, catalyst is included throughout the length of each anode chamber 2g as well as each catalyst chamber 3.

With the apparatus of Fig. 1, fuel supply such as, for example, methane and water, is introduced into the entry ends 3a of the catalyst chambers 3, and is reformed in accordance with the well known reaction:

$$CH_4 + 2H_2O \rightarrow CO_2 + 4H_2 \qquad (I)$$

Since this reaction is endothermic, heat will be absorbed from each of the chambers 3, thereby cooling the chambers and the adjacent cells. This cooling, however, will be greater at the entry end 3a of the chamber 3 and, therefore, at the regions of the cells 2 closest the faces 2b, and will decrease in moving in the direction of gas flow to the exit end 3b and, therefore, to the regions of the cells 2 adjacent the end faces 2a. Cooling occurs in this manner because the concentration of fuel supply is greatest at the entry ends 3a and decreases in moving to the exit ends 3b of the catalyst chambers 3.

The partially reformed fuel supply after exiting from the catalyst chambers 3 is then coupled by the manifold 4 to the anode chambers 2g of the adjacent cells 2 of the apparatuses 1. In the chambers 2g, additional reforming in accordance with the reaction I as well as electrochemical conversion in accordance with the reaction II below takes place:

$$CO_3^{=} + H_2 \rightarrow H_2O + CO_2 + 2e \qquad (II)$$

The water produced by the reaction II as well as the withdrawal of hydrogen drives the reaction I in the anode chambers 2g to completion. In this case, the reforming reaction and, therefore, the cooling will be greater at the gas entry ends 2g1 and, therefore, in the regions of the cells 2 adjacent the end faces 2a and will decrease in the direction of gas flow to the gas exit end 2g2, and therefore, in the regions of the cells 2 adjacent the end faces 2b.

As can be appreciated, therefore, the reforming reaction for the gas flow through the catalyst chambers 3 tends to cool the cells 2 in the regions adjacent the end faces 2a to a greater extent than in the regions of the cells 2 adjacent the end faces 2b. The reforming reaction of the gas flow through the anode chambers 2g, on the other hand, which flow is countercurrent to the flow in the catalyst chambers, cools the cells 2 in the opposite manner, i.e., the regions of the cells adjacent the end face 2b are cooled to a greater extent that the regions adjacent the end face 2a. The overall effect is thus a more uniform cooling of the cells 2 than could otherwise be achieved by exclusively utilizing either the catalyst chambers 3 or the anode chambers 2g for the reforming reaction. The temperature distribution or profile of the cells 2 along the path of the gases is thus maintained more uniform.

As can be further appreciated, a more refined control over the temperature distribution can be realized by restricting the location of the catalyst in the chambers 2g and 3. Fig. 3 illustrates one such embodiment wherein catalyst extends from the entry and 3a to a point short of the exit end 3b of the chambers 3. The chambers 3 are thus devoid of catalyst over a region 3c adjacent the fuel cell ends 2a of the cells 2. Similarly, the catalyst in the anode chambers 2g is short of the exit ends 2g2 to define non-catalyst regions 2g3.

It is contemplated under the invention that in designing a stack as shown in Figs. 1 and 3 that there be one catalyst chamber 3 for every 5 to 10 fuel cells 2. It is also preferable that the volume of the catalyst chamber be less than the cumulative volume of the anode chambers 2 which it feeds. The actual values of the numbers of cells, relative volumes and relative filling of the chambers with catalyst for optimum uniformity can be emperically determined for any particlar case.

It should be noted that in the case of the Fig. 1 arrangement, i.e., with catalyst throughout the entire lengths of the chambers 2g and 3, it is expected that most of the reaction I in the chambers 3 will take place in the first half of the chambers measured from the entry ports 3a. Likewise, the reaction in the anode chambers 2g would be expected to occur in the first one-third of the chambers measured from the entry ports 2g1.

As can be further appreciated from the above and as shown, each of the anode gas chambers 2g and the catalyst 6 in each of these chambers are in gas communication over their respective lengths with the adjacent anode electrode 2f. The chambers 3 and the catalyst 6 therein, in turn, as shown, are in gas communication with the cells 2 only through coupling of their exit ends 3b with the entry ends 2g2 of the anode chambers 2g.

## Claims

1. Apparatus comprising:

a number of one or more first fuel cells arranged in a first stack, the first cells having respective first end faces which are aligned and respective second end faces which are aligned, each first cell including a sandwich construction of an anode chamber, an anode electrode, an electrolyte, a cathode electrode and a cathode chamber, each anode chamber extending between the first and second end faces of its respective first cell and having a gas entry port adjacent the first end face and a gas exit port adjacent the second end face;

a catalyst chamber in heat conducting relationship with the first stack and running in the direction of the anode chambers of said first cells, said catalyst chamber having a gas entry port adjacent the second end faces of said first cells and a gas exit port adjacent the first end faces of said first cells;

a catalyst for endothermic reforming of the hydrocarbon content of a fuel disposed in one or more of said anode chambers and said catalyst chamber;

and first means for coupling the gas exit port of said catalyst chamber to the gas entry ports of the anode chambers of said first cells.

2. Apparatus in accordance with claim 1 further comprising:

second means for supplying fuel having hydrocarbon content to said gas entry port of said catalyst chamber.

3. Apparatus in accordance with claim 1 wherein:

said first stack includes from five to ten first fuel cells.

4. Apparatus in accordance with claim 1 wherein:

catalyst is disposed in said catalyst chamber from the gas entry port of said catalyst chamber to a point short of the gas exit port of said catalyst chamber;

and catalyst is partially disposed in each of its respective anode chambers from the gas entry port of the chamber to a point short of the gas exit port.

5. Apparatus in accordance with claim 1 wherein:

said first means comprises a first manifold common to the gas exit ports of said catalyst chamber and the gas entry ports of said anode chambers of said one or more cells.

6. Apparatus in accordance with claim 1 further comprising:

a number of one or more second fuel cells arranged in a second stack, the second cells having respective first end faces which are aligned with each other and with the first end faces of the first fuel cells and respective second end faces which are aligned with each other and the respective second end faces of the first fuel cells, said each second cell including a sandwich construction of an anode chamber, an anode electrode, an electrolyte, a cathode electrode and a cathode chamber, each anode chamber extending between the first and second end faces of its respective second cell and having a gas entry port adjacent the first end face and a gas exit port adjacent the second end face;

said second stack being arranged in stacked spaced relationship with said first stack so that said space between said stacks forms said catalyst chamber which is in heating conducting relationship with both said stacks;

said catalyst being disposed in the anode chambers of one or more of said second cells;

and said first means further coupling the gas exit port of said catalyst chamber to the gas entry ports of the anode chambers of said second cells.

7. Apparatus in accordance with claim 6 wherein:

said apparatus further comprises a further catalyst chamber in heating conducting relationship with and following said second stack, said further catalyst chamber running in the direction of the anode chambers of said second cells and having a gas entry port adjacent the second end faces of said second cells and a gas exit port adjacent the first end faces of said second cells;

said catalyst being disposed in said further catalyst chamber;

and said first means further coupling the gas exit port of said further catalyst chamber to the gas entry ports of the anode chambers of said second fuel cells.

8. Apparatus in accordance with claim 7 wherein:

said first means comprises a first manifold common to the gas exit ports of said catalyst chambers and the gas entry ports of the anode chambers of said one or more first fuel cells and said one or more second fuel cells.

9. Apparatus in accordance with claim 8 further comprising:

a second manifold common to the gas exit ports of the anode chambers of said first cells;

and a third manifold common to the gas exit ports of the anode chambers of said second cells.

10. Apparatus in accordance with claim 1 wherein:
each of said anode chambers and the catalyst in each of said chambers are in gas communication over their respective lengths with the adjacent anode.

11. Apparatus in accordance with claim 10 wherein:
said catalyst chamber and the catalyst therein are in gas communication with said first cells only through said coupling of the gas exit port of said catalyst chamber and the gas entry ports of the anode chambers of said first cells.

**Patentansprüche**

1. Vorrichtung mit
einer Anzahl einer oder mehrerer erster Brennstoffzellen, die in einem ersten Stapel angeordnet sind, wobei die ersten Brennstoffzellen entsprechende erste fluchtende Endflächen und entsprechende zweite fluchtende Endflächen aufweisen, jede erste Zelle einen geschichteten Aufbau aus einer Anodenkammer, einer Anodenelektrode, einem Elektrolyt, einer Kathodenelektrode und einer Kathodenkammer enthält, jede Anodenkammer sich zwischen der ersten und der zweiten Endfläche ihrer entsprechenden ersten Zelle erstreckt und eine Gaeinlaßöffnung bei der ersten Endfläche und eine Gasauslaßöffnung bei der zweiten Endfläche hat;
einer Katalysatorkammer in wärmeleitender Anordnung mit dem ersten Stapel und in Richtung der Anodenkammern der ersten Zellen verlaufend, wobei die Katalysatorkammer eine Gaseinlaßöffnung bei den zeiten Endflächen der ersten Zellen und eine Gasauslaßöffnung bei den ersten Endflächen der ersten Zellen aufweist;
einem Katalysator zur endothermen Reformierung des Kohlenwasserstoffgehalts eines Brennstoffes, der in einer oder mehreren der Anodenkammern und der Katalysatorkammern angeordnet ist;
und einer ersten Einrichtung zur Verbindung der Gasauslaßöffnung der Katalysatorkammer mit den Gaseinlaßöffnungen der Anodenkammern der ersten Zellen.

2. Vorrichtung nach Anspruch 1 mit
zweiten Einrichtungen zur Zuführung von Brennstoff mit einem Kohlenwasserstoffgehalt zu der Gaseinlaßöffnung der Katalysatorkammer.

3. Vorrichtung nach Anspruch 1, wobei
der erste Stapel fünf bis zehn erste Brennstoffzellen enthält.

4. Vorrichtung nach Anspruch 1, wobei
der Katalysator in der Katalysatorkammer von der Gaseinlaßöffnung der Katalysatorkammer bis unmittelbar vor der Gasauslaßöffnung der Katalysatorkammer angeordnet ist,
und der Katalysator teilweise in jeder der entsprechenden Anodenkammern von der Gaseinlaßöffnung der Kammer bis unmittelbar vor der Gasauslaßöffnung angeordnet ist.

5. Vorrichtung nach Anspruch 1, wobei
die erste Einrichtung eine erste Sammelleitung aufweist, die den Gasauseinlaßöffnungen der Katalysatorkammer und den Gaseinlaßöffnungen der Anodenkammern der einen oder der mehreren Zellen gemeinsam ist.

6. Vorrichtung nach Anspruch 1, mit ferner
einer Anzahl einer oder mehrerer zweiter Brennstoffzellen, die in einem zweiten Stapel angeordnet sind, wobei die zweiten Zellen entsprechende erste Endflächen, die miteinander und mit den ersten Endflächen der ersten Brennstoffzellen fluchten, und entsprechende zweite Endflächen, die miteinander und mit den entsprechenden zweiten Endflächen der ersten Brennstoffzellen fluchten, aufweisen, jede zweite Zelle einen beschichteten Aufbau aus einer Anodenkammer, einer Anodenelektrode, einem Elektrolyt, einer Kathodenelektrode und einer Kathodenkammer enthält, jede Anodenkammer sich zwischen der ersten und der zweiten Endfläche ihrer entsprechenden zweiten Zelle erstreckt und eine Gaseinlaßöffnung bei der ersten Endfläche und eine Gasauseinlaßöffnung bei der zweiten Endfläche hat;
wobei die zweite Stapel mit Abstand zu und in einem Stapel mit dem ersten Stapel angeordnet ist, so daß der Abstand zwischen den Stapeln die Katalysatorkammer bildet, die sich in Wärmeleitung mit beiden Stapeln befindet;
der Katalysator in den Anodenkammern einer oder mehrerer der zweiten Zellen angeordnet ist;
die ersten Einrichtungen ferner die Gasauslaßöffnung der Katalysatorkammer mit den Gaseinlaßöffnungen der Anodenkammern der zweiten Zellen verbindet.

7. Vorrichtung nach Anspruch 6, wobei
die Vorrichtung ferner eine weitere Katalysatorkammer in Wärmeleitung mit und im Anschluß an den zweiten Stapel aufweist, wobei die weitere Katalysatorkammer in Richtung der Anodenkammern der zweiten Zellen verlauft und eine Gaseinlaßöffnung bei den zweiten Endflächen der zweiten Zellen und eine Gasauseinlaßöffnung bei den ersten Endflächen der zweiten Zellen aufweist,
der Katalysator in der weiteren Katalysatorkammer angeordnet ist;
und die erste Einrichtung ferner die Gasauslaßöffnung der weiteren Katalysatorkammer mit den Gaseinlaßöffnungen der Anodenkammern der zweiten Brennstoffzellen verbindet.

8. Vorrichtung nach Anspruch 7, wobei
die erste Einrichtung eine erste Sammelleitung aufweist, die den Gasauslaßöffnungen der Katalysatorkammern und den Gaseinlaßöffnungen der Anodenkammern der einen oder den mehreren ersten Brennstoffzellen und der einen oder den mehreren zweiten Brennstoffzellen gemeinsam ist.

9. Vorrichtung nach Anspruch 8, mit ferner
einer zweiten Sammelleitung, die den Gasauslaßöffnungen der Anodenkammern der ersten Zellen gemeinsam ist;
und einer dritten Sammelleitung, die den Gasauslaßöffnungen der Anodenkammern der zweiten Zellen gemeinsam ist.

10. Vorrichtung nach Anspruch 1, wobei jede der Anodenkammern und der Katalysator in jeder der Kammern über ihre Längen mit der angrenzenden Anode in Gasverbindung stehen.

11. Vorrichtung nach Anspruch 10, wobei die Katalysatorkammer und der Katalysator darin nur über die Verbindung der Gasauslaßöffnung der Katalysatorkammer und der Gaseinlaßöffnungen der Anodenkammern der ersten Zellen in Gasverbindung mit den ersten Zellen stehen.

## Revendications

1. Dispositif comprenant:

une ou plusieurs première(s) pile(s) à combustible en un premier empilement, lesdites premières piles ayant les premières faces terminales respectives alignées et les secondes faces terminales respectives alignées, chaque première pile comprenant un ensemble sandwich constitué d'un compartiment anodique, d'une anode, d'un électrolyte, d'une cathode et d'un compartiment cathodique, chaque compartiment anodique s'étendant entre les première et seconde faces terminales de sa première pile respective et ayant un orifice d'admission du gaz contigu à la première face terminale et un orifice de sortie du gaz contigu à la seconde face terminale;

un comparatiment de catalyse en relation d'échange thermique avec le premier empilement et orienté dans la direction des compartiments anodiques desdites premières piles, ledit compartiment de catalyse ayant un orifice d'admission des gaz contigu aux secondes faces terminales, et un orifice de sortie des gaz contigu aux premières faces terminales desdites premières piles;

un catalyseur pour le réformage endothermique des hydrocarbures d'un combustible disposé dans un ou plusieurs desdits compartiments anodiques et dudit compartiment de catalyse;

et des premiers moyens de jonction de l'orifice de sortie des gaz dudit compartiment de catalyse avec les orifices d'admission des gaz des compartiments anodiques desdites premières piles.

2. Dispositif selon la revendication 1, comprenant en outre:

des seconds moyens d'admission du combustible renfermant des hydrocarbures audit orifice d'admission des gaz dudit compartiment de catalyse.

3. Dispositif selon la revendication 1, où:

ledit premier empilement comprend de cinq à dix premières piles à combustible.

4. Dispositif selon la revendication 1, où:

le catalyseur est disposé, dans ledit compartiment de catalyse, depuis l'orifice d'admission des gaz dudit compartiment de catalyze jusqu'à un point proche de l'orifice de sortie des gaz dudit compartiment de catalyse;

et le catalyseur est disposé partiellement, dans chacun de ses compartiments anodiques respectifs, depuis l'orifice d'admission des gaz du compartiment jusqu'à un point proche de l'orifice de sortie des gaz.

5. Dispositif selon la revendication 1, où:

ledit premier moyen comprend un premier collecteur commun aux orifices de sortie des gaz dudit compartiment de catalyse et aux orifices d'admission des gaz des compartiments anodiques de ladite (desdites) première(s) pile(s).

6. Dispositif selon la revendication 1, comprenant encore:

une ou plusieurs secondes piles à combustible disposée(s) en un deuxième empilement, les secondes piles ayant respectivement leurs premières faces terminales alignées les unes avec les autres en même temps qu'avec les premières faces terminales des premières piles à combustible, et, respectivement, leurs secondes faces terminales alignées les unes avec les autres en même temps qu'avec les secondes faces terminales respectives des premières piles à combustible, chaque dite seconde pile comprenant un ensemble sandwich consistant en un compartiment anodique, une anode, un électrolyte, une cathode et un compartiment cathodique, chaque compartiment anodique s'étendant entre les première et seconde faces terminales de sa seconde pile respective et ayant un orifice d'admission des gaz contigu à la première face terminale et un orifice de sortie des gaz contigu à la seconde face terminale;

ledit deuxième empilement étant spatialement disposé par rapport audit premier empilement de manière à ce que l'espace entre lesdits empilements forme ledit compartiment de catalyse, qui est en relation d'échange thermique avec les deux empilements nommès;

ledit catalyseur ètant disposé dans les compartiments anodiques d'une ou plusieurs desdites secondes piles;

et ledit premier moyen permettant en outre de faire la jonction entre l'orifice de sortie des gaz dudit compartiment de catalyse et les orifices d'admission des gaz des compartiments anodiques desdites secondes piles.

7. Dispositif selon la revendication 6, où:

ledit dispositif comprend en outre un autre compartiment de catalyse en relation d'échange thermique avec (et à la suite) dutit second empilement, ledit autre compartiment de catalyse étant orienté dans la direction des compartiments anodiques desdites secondes piles et ayant un orifice d'admission des gaz contigu aux secondes faces terminales desdites secondes piles et un orifice de sortie des gaz contigu aux premières faces terminales desdites secondes piles;

ledit catalyseur étant disposé dans ledit compartiment de catalyse;

et ledit premier moyen permettant en outre de faire la jonction entre l'orifice de sortie des gaz dudit autre compartiment de catalyse et les orifices d'admision des gaz des compartiments anodiques desdites secondes piles à combustible.

8. Dispositif selon la revendication 7, où:

ledit premier moyen comprend un premier collecteur commun aux orifices de sortie des gaz desdits compartiments de catalyse et aux orifices d'admission des gaz des compartiments anodiques de ladite (desdites) première(s) pile(s) à combustible et de ladite (desdites) seconde(s) pile(s) à combustible.

9. Dispositif selon la revendication 8, comprenant encore:

un deuxième collecteur commun aux orifices de sortie des gaz des compartiments anodiques desdites premières piles;

et un troisième collecteur commun aux orifices de sortie des gaz des compartiments anodiques desdites secondes piles.

10. Dispositif selon la revendication 1, où:

chacun desdits compartiments anodiques et le catalyseur de chacun desdits compartiments sont en communication, pour les gaz, avec l'anode voisine, sur toute sa longueur respective.

11. Dispositif selon la revendication 10, où:

ledit compartiment de catalyse et le catalyseur qui s'y trouve sont en communication, pour les gaz, avec lesdites premières piles, uniquement grâce à la jonction de l'orifice de sortie des gaz dudit compartiment de catalyse avec les orifices d'admission des gaz des compartiments anodiques desdites premières piles.

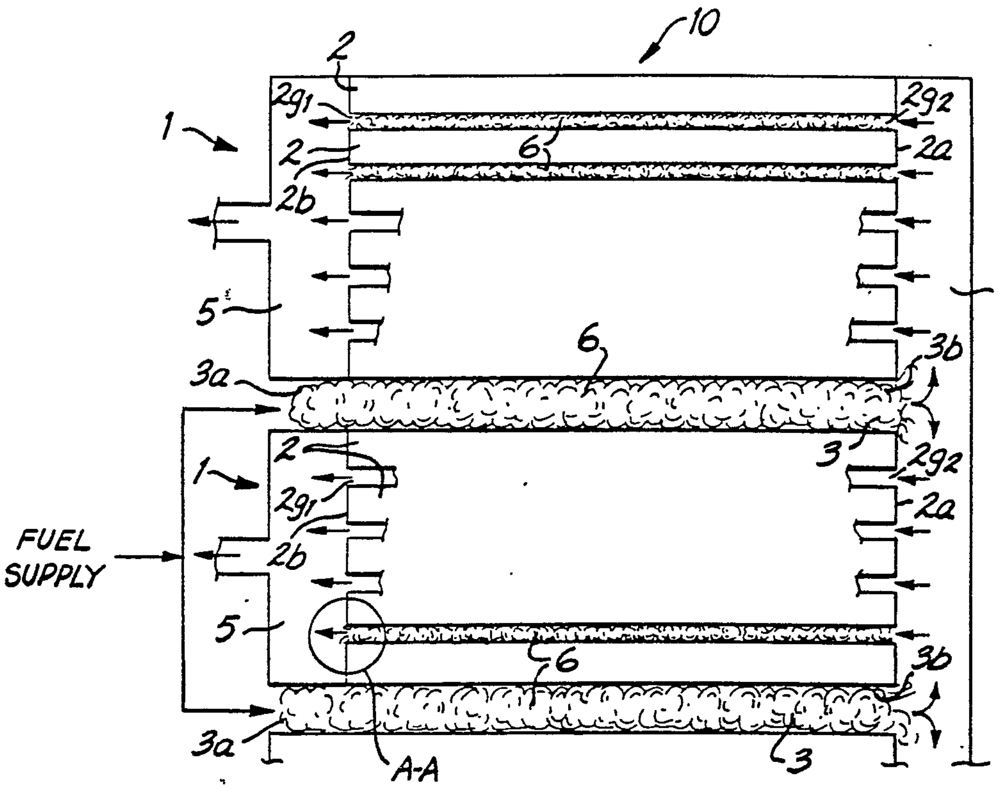
10
2
$2g_1$
$2g_2$
1
2
6
2a
2b
5
4
6
3a
3b
2
3
$2g_2$
1
$2g_1$
2a
2b
FUEL SUPPLY
5
6
3b
3a
A-A
3

FIG. 1

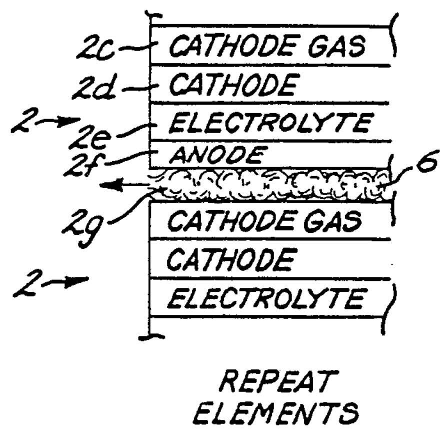
2c
CATHODE GAS
2d
CATHODE
2
2e
ELECTROLYTE
2f
ANODE
6
2g
CATHODE GAS
CATHODE
2
ELECTROLYTE
REPEAT ELEMENTS

FIG. 2 (A-A)

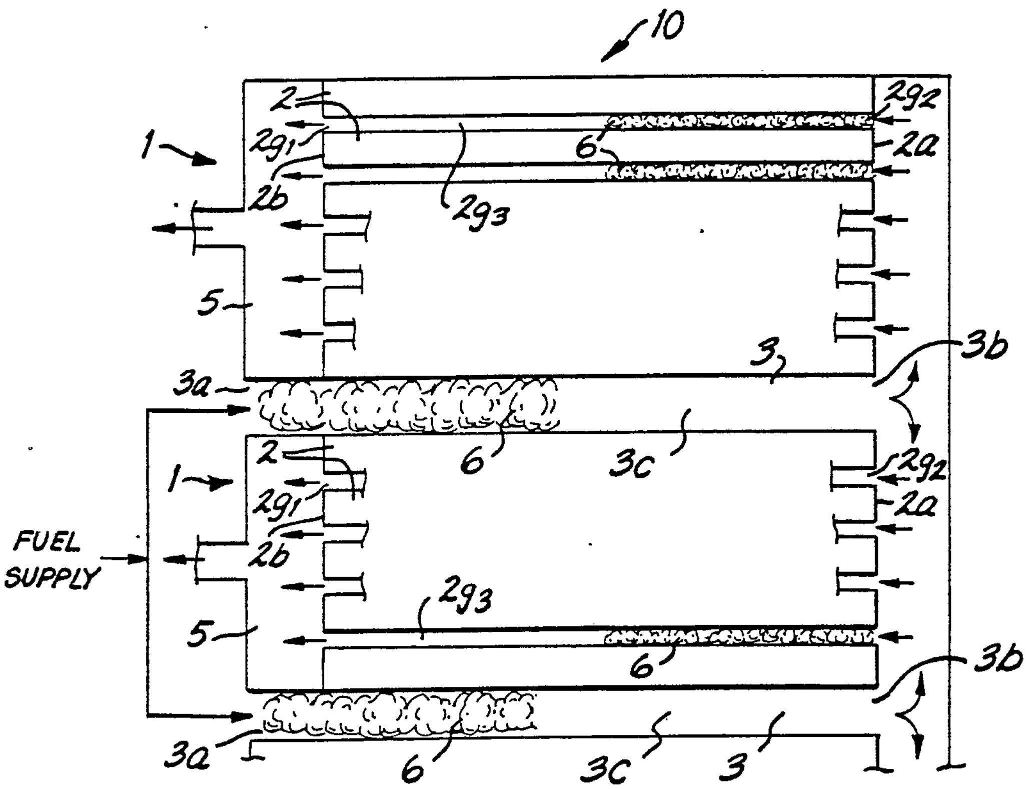
10
2
$2g_2$
$2g_1$
6
2a
1
2b
$2g_3$
5
3
3b
3a
6
3c
2
$2g_2$
1
$2g_1$
2a
FUEL SUPPLY
2b
$2g_3$
5
6
3b
3a
6
3c
3

FIG. 3